# EUROPÄISCHE PATENTSCHRIFT

(11) **EP 4 286 711 B1**
(45) Veröffentlichungstag und Bekanntmachung des Hinweises auf die Patenterteilung: **11.06.2025**
(21) Anmeldenummer: 23203787.9
(22) Anmeldetag: 16.02.2021
(51) Int. Cl.: F16H 57/04, F16H 57/033

(54) **VARIANTENREDUZIERTE EINSPRITZSCHMIERUNG**
VARIANT-REDUCED INJECTION LUBRICATION
LUBRIFICATION PAR INJECTION RÉDUITE EN VARIANTS

(30) Priorität: 18.03.2020 DE 102020203438
(43) Veröffentlichungstag der Anmeldung: 06.12.2023
(62) Teilanmeldung aus: 21157282.1
(73) Patentinhaber: ZF Friedrichshafen AG, 88046 Friedrichshafen (DE)
(72) Erfinder: Fauck, Matthias, 58452 Witten (DE); Schmitz, Jochen, 45473 Mülheim an der Ruhr (DE)

(56) Entgegenhaltungen:
- WO-A1-2019/141383
- DE-A1- 102007 020 453
- DE-A1- 19 912 328
- JP-A- 2007 139 128
- US-A1- 2015 285 368

## Beschreibung

Die Erfindung betrifft ein Getriebe nach dem Oberbegriff von Anspruch 1. Ein solches Getriebe ist aus der WO 2019/141383 bekannt.

Aus dem Stand der Technik ist bekannt, eine sogenannte Einspritzschmierung über Rohrleitungen zu realisieren. Rohrleitungen sind von Nachteil, da sie mit anderen Teilen des Getriebes um knappen Bauraum konkurrieren. Soll eine Baureihe mit mehreren Getriebevarianten realisiert werden, ist zudem für jede Variante eine gesonderte Ausführung der Rohrleitung notwendig.

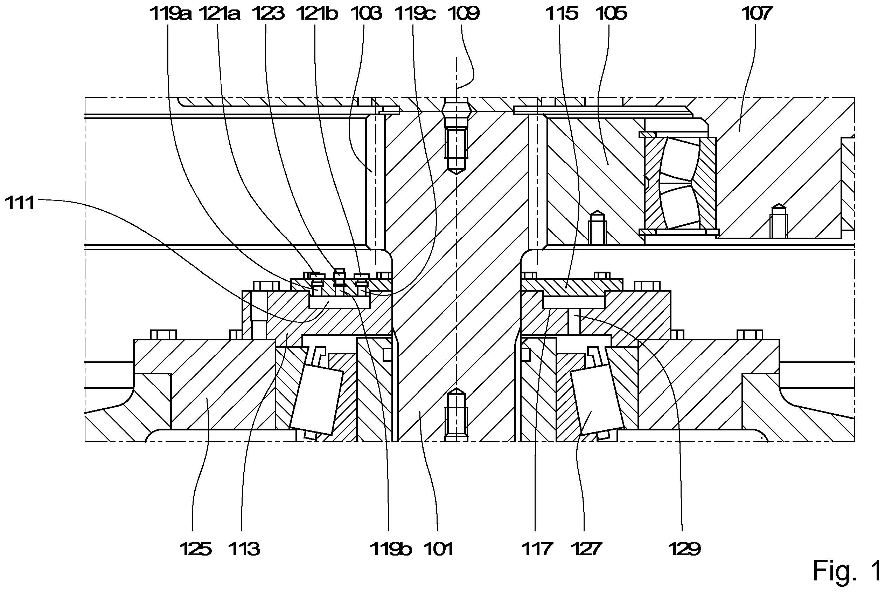

Der Erfindung liegt die Aufgabe zugrunde, die Schmierung eines Getriebes zu verbessern. Diese Aufgabe wird gelöst durch ein Getriebe nach Anspruch 1. Bevorzugte Weiterbildungen sind in den Unteransprüchen enthalten und ergeben sich aus nachfolgender Beschreibung sowie dem in Fig. 1 dargestellten Ausführungsbeispiel.

Das erfindungsgemäße Getriebe weist mindestens ein drehbares Bauteil auf. Das drehbare Bauteil ist relativ zu einem gehäusefesten Bezugssystem, etwa einem Getriebegehäuse selbst, drehbar gelagert. Beispielsweise kann es sich bei dem Bauteil um eine Welle, eine Nabe oder ein Zahnrad handeln.

Das Getriebe weist darüber hinaus mindestens eine Ölleitung auf. Eine Ölleitung ist ein Mittel zum Leiten von Öl. Die Ölleitung hat bevorzugt die Form eines Kanals. Ein Kanal zeichnet sich durch einen länglichen Hohlraum mit einer Eintrittsmündung und mindestens einer Austrittsmündung aus. Der Hohlraum leitet das Öl von der Eintrittsmündung zu der mindestens einen Austrittsmündung. Das Öl tritt an dabei der Eintrittsmündung in den Hohlraum ein und verlässt ihn durch die mindestens eine Austrittsmündung verlässt.

Die Ölleitung des erfindungsgemäßen Getriebes weist eine erste und eine zweite Austrittsöffnung auf. Die ersten und die zweite Austrittsöffnung bilden jeweils eine Austrittsmündung der Ölleitung aus.

Erfindungsgemäß ist mindestens ein Verschlusselement für die Austrittsöffnungen vorgesehen. Mit dem Verschlusselement ist wahlweise die erste oder die zweite Austrittsöffnung öldicht verschließbar. Die erste und die zweite Austrittsöffnung sind also derart ausgebildet, dass das Verschlusselement in die jeweilige Öffnung einsetzbar ist. Insbesondere ist es möglich, das Verschlusselement aus der ersten Austrittsöffnung zu entnehmen und in die zweite Austrittsöffnung einzusetzen. Aus der zweiten Austrittsöffnung wiederum kann das Verschlusselement entnommen werden, um es in die erste Austrittsöffnung einzusetzen. Dies impliziert, dass die erste Austrittsöffnung und die zweite Austrittsöffnung baugleich sind. Die erste Austrittsöffnung und die zweite Austrittsöffnung unterscheiden sich ausschließlich hinsichtlich ihrer Positionierung innerhalb der Ölleitung.

Da die erste und die zweite Austrittsöffnung mit dem Verschlusselement verschließbar sind, weisen die beiden Austrittsöffnungen jeweils mindestens ein Mittel zur Fixierung des Verschlusselements auf. Das mindestens eine Mittel der ersten Austrittsöffnung und das mindestens eine Mittel der zweiten Austrittsöffnung sind baugleich. Bei dem Mittel handelt es sich beispielsweise um ein Gewinde.

Das Verschlusselement weist ein korrespondierendes Mittel auf, das mit dem Mittel der ersten Austrittsöffnung bzw. mit dem Mittel der zweiten Austrittsöffnung derart in Wechselwirkung bringbar ist, dass das Verschlusselement in der ersten Austrittsöffnung bzw. in der zweiten Austrittsöffnung fixiert wird und die jeweilige Austrittsöffnung öldicht verschließt. Bei dem Mittel des Verschlusselements kann es sich insbesondere um ein Gewinde handeln, das mit dem Gewinde der ersten Austrittsöffnung bzw. der zweiten Austrittsöffnung verschraubbar ist. Das Verschlusselement kann dann wahlweise in die ersten Austrittsöffnung oder die zweite Austrittsöffnung eingeschraubt werden.

Neben den beschriebenen Mitteln zum Fixieren des Verschlusselements in der ersten Austrittsöffnung oder der zweiten Austrittsöffnung ist darüber hinaus bevorzugt mindestens ein Dichtelement vorgesehen, welches das Verschlusselement gegenüber der jeweiligen Austrittsöffnung öldicht abdichtet. Als Dichtelement eignet sich ein herkömmlicher O-Ring. Auch können konische Dichtflächen zur Abdichtung des Verschlusselements gegenüber der jeweiligen Austrittsöffnung vorgesehen sein. Genau eine der beiden Austrittsöffnungen, das heißt entweder die erste Austrittsöffnung oder die zweite Austrittsöffnung, ist vorliegend mit dem Verschlusselement verschlossen. Die andere Austrittsöffnung ist unverschlossen. Ist also die erste Austrittsöffnung mit dem Verschlusselement verschlossen, ist die zweite Austrittsöffnung unverschlossen. Ist umgekehrt die zweite Austrittsöffnung mit dem Verschlusselement verschlossen, ist die erste Austrittsöffnung unverschlossen.

Eine unverschlossene Austrittsöffnung ist öldurchlässig. Öl, das von der Ölleitung geleitet wird, tritt also aus der unverschlossenen Austrittsöffnung aus. Entsprechend dient die unverschlossene Austrittsöffnung der Zuführung von Öl zu Schmierstellen innerhalb des Getriebes. Insbesondere lässt sich das drehbare Bauteil über die unverschlossene Austrittsöffnung mit Öl versorgen.

Die Erfindung ist von Vorteil, da sich die Ölversorgung ohne konstruktive Änderungen an das jeweilige Getriebe anpassen lässt. Um Schmierstellen des jeweiligen Getriebes, die sich in unterschiedlichen Positionen befinden können, mit Öl zu versorgen, ist es lediglich erforderlich, nicht benötigte Austrittsöffnungen mittels des mindestens einen Verschlusselements zu verschließen.

Gemäß der Erfindung weist das drehbare Bauteil mindestens eine Schmierstelle auf. Eine Schmierstelle ist eine Stelle, die mit Öl versorgt werden muss. Beispielsweise müssen Verzahnungen oder Lager mit Öl versorgt werden und stellen daher Schmierstellen dar. Insbesondere kann das drehbare Bauteil eine Schmierstelle in Gestalt einer mit Öl zu versorgenden Verzahnung oder eines mit Öl zu versorgenden Lagers aufweisen.

Die unverschlossene Austrittsöffnung ist weiterbildungsgemäß auf die Schmierstelle gerichtet. Dies bedeutet, dass die unverschlossene Austrittsöffnung derart positioniert und ausgerichtet ist, dass das aus der Austrittsöffnung austretende Öl mindestens teilweise in die Schmierstelle gelangt, sodass die Schmierstelle mit Öl versorgt wird.

Das Bauteil ist um eine Drehachse drehbar gelagert. Gemäss der Erfindung sind die Austrittsöffnungen in einem unterschiedlichen Abstand zu dazu angeordnet. Dies bedeutet, dass ein Abstand der ersten Austrittsöffnung von der Mittelachse und ein Abstand der zweiten Austrittsöffnung von der Mittelachse sich voneinander unterscheiden.

Mit Abstand der Öffnungen wird der Abstand beliebiger, für beide Öffnungen nach gleichen Kriterien zu wählender Referenzpunkte von der Mittelachse bezeichnet. Bei den Referenzpunkten kann es sich etwa um Mittelpunkte der Öffnungen handeln. Auch kommt als Referenzpunkt der Punkt der jeweiligen Öffnung infrage, dessen Abstand zu der Mittelachse geringer ist als die Abstände der übrigen Punkte der jeweiligen Öffnung. In dem Fall bildet der Referenzpunkt einen Punkt der jeweiligen Öffnung, dessen Abstand zu der Drehachse minimal ist.

Durch die unterschiedlichen Abstände der Austrittsöffnungen zu der Drehachse lässt sich eine vereinfachte eine Anpassung an drehbare Schmierstellen erzielen. So wird je nach Abstand der drehbaren Schmierstelle von der Drehachse die erste Austrittsöffnung verschlossen, während die zweite Austrittsöffnung unverschlossen bleibt, oder die zweite Austrittsöffnung wird verschlossen, während die erste Austrittsöffnung unverschlossen bleibt.

Bevorzugt ist die Ölleitung als Ringkanal weitergebildet. Ein Ringkanal hat eine rotationssymmetrische Grundform. Die Grundform eines Körpers bezeichnet die Form eines ursprünglichen Körpers, aus dem der erstgenannte Körper durch Eliminieren einzelner Bereiche, etwa durch Einfügen von Aussparungen, und/oder durch Hinzufügen einzelner Bereiche entstanden ist.

Aus der rotationssymmetrischen Grundform des Ringkanals, ergibt sich eine rotationssymmetrische Grundform des ölleitenden Hohlraums. Die Grundform eines Hohlraums bezeichnet analog zu der Grundform eines Körpers die Form eines ursprünglichen Hohlraums, aus dem der erstgenannte Hohlraum durch Eliminieren einzelner Bereiche, etwa durch Hinzufügen einzelner Bereiche des Körpers, der den Hohlraum ausbildet, und/oder durch Hinzufügen einzelner Bereiche, etwa durch Einfügen von Aussparungen in den Körper, der den Hohlraum bildet, entstanden ist.

Eine Mittelachse bzw. Symmetrieachse des Ringkanals stimmt weiterbildungsgemäß mit der Drehachse des drehbaren Bauteils überein.

Die Weiterbildung ist von Vorteil, da sie die Ölversorgung unabhängig von einer Winkellage der Ölleitung bezüglich der Drehachse des drehbaren Bauteils sicherstellt. Ist die Ölleitung als Ringkanal ausgebildet, bleiben der Abstand der ersten Austrittsöffnung von der Drehachse und der Abstand der zweiten Austrittsöffnung von der Drehachse unabhängig von der Winkellage der Ölleitung konstant. Dadurch verringert sich das Risiko, dass es infolge eines fehlerhaften Einbaus der Ölleitung zu einer Mangelschmierung kommt.

Bevorzugt ist das Getriebe mit mindestens einer Nut und mindestens einer Platte weitergebildet. Eine Nut ist eine längliche Vertiefung einer Oberfläche. Sie zeichnet sich gegenüber anderen Vertiefungen einer Oberfläche durch einen entlang des Verlaufs der Nut unveränderlichen Querschnitt aus. Der Querschnitt ist also gegenüber einer orthogonal zu einer den Verlauf der Nut beschreibenden Kurve ausgerichteten Schnittebene invariant.

Eine Platte ist ein Bauteil, für das Folgendes gilt: Jede Abmessung bzw. Ausdehnung des Bauteils parallel zu einer Referenzebene ist größer als jede Abmessung des Bauteils orthogonal zu der Ebene. Es handelt sich also um ein Bauteil, dessen räumliche Erstreckung entlang der Referenzebene die räumliche Erstreckung des Bauteils orthogonal dazu immer, d.h. in sämtlichen Kombinationen von miteinander zu vergleichenden Abmessungen übertrifft.

Die Platte weist weiterbildungsgemäß die erste Austrittsöffnung und die zweite Austrittsöffnung auf. Weiterhin deckt die Platte die Nut ab. Insbesondere deckt die Platte die Nut öldicht ab. Dies bedeutet, dass zwischen den Rändern der Nut und der Platte kein Öl austreten kann. Eine Verbindung zwischen der Platte und den Rändern der Nut ist also öldicht.

Die Platte bildet mit der Nut einen Hohlraum. Dieser ist hat vorzugsweise, wie oben beschrieben, eine rotationssymmetrische Grundform. Die erste Austrittsöffnung und die zweite Austrittsöffnung sind ölleitend mit dem Hohlraum verbunden. Das ist genau dann der Fall, wenn die beiden Austrittsöffnungen sich zwischen den Rändern der Nut befinden.

In einer darüber hinaus bevorzugten Weiterbildung weist das Getriebe einen Grundkörper auf, der die Nut ausbildet. Auf dem Grundkörper ist entsprechend obiger Beschreibung die Platte fixiert. Der Grundkörper ist bevorzugt in einem Gehäuse des Getriebes oder in einem gehäusefesten Bauteil fixiert. Insbesondere kann das Gehäuse selbst den Grundkörper ausbilden.

Bevorzugt wird eine separate Ausführung des Grundkörpers und des Gehäuses derart, dass es sich bei dem Grundkörper und dem Gehäuse um separate, physisch voneinander getrennte Stücke handelt. Dies bedeutet insbesondere, dass das Gehäuse und der Grundkörper nicht einstückig miteinander verbunden sind. Eine separate Ausführung des Grundkörpers und des Gehäuses erleichtert die Montage.

Das erfindungsgemäße Getriebe oder eine bevorzugte Weiterbildung ist vorzugsweise Teil einer Getriebebaureihe. Eine Getriebebaureihe ist eine Gesamtheit von mindestens zwei Getrieben. Es handelt sich also um eine Anordnung, die ein erstes Getriebe und ein zweites Getriebe umfasst. Bei dem ersten Getriebe und dem zweiten Getriebe handelt es sich um erfindungsgemäße Getriebe oder bevorzugte Weiterbildungen.

Die Ölleitungen des ersten Getriebes und des zweiten Getriebes sind baugleich. Ebenso sind die Verschlusselemente des ersten Getriebes und des zweiten Getriebes baugleich. Zwei Komponenten, vorliegend die Ölleitungen bzw. Verschlusselemente, sind baugleich, wenn sie in ihren physikalischen Parametern - insbesondere hinsichtlich ihrer Material- und Geometrieeigenschaften - im Rahmen der auftretenden Fertigungstoleranzen übereinstimmen.

Die erste Austrittsöffnung der Ölleitung des ersten Getriebes und die zweite Austrittsöffnung der Ölleitung des zweiten Getriebes sind mit dem Verschlusselement des jeweiligen Getriebes verschlossen. Dies impliziert, dass die zweite Austrittsöffnung der Ölleitung des ersten Getriebes und die erste Austrittsöffnung der Ölleitung des zweiten Getriebes unverschlossen sind.

Ein bevorzugtes Ausführungsbeispiel der Erfindung ist in Fig. 1 dargestellt. Im Einzelnen zeigt:
Fig. 1 einen Ausschnitt eines Getriebes.

In Fig. 1 ist eine Sonnenwelle 101 dargestellt, die ein Sonnenrad 103 ausbildet. Das Sonnenrad 103 ist mit einer Außenverzahnung versehen, die mit den Verzahnungen von Planetenrädern 105 kämmt. Die Planetenräder 105 sind drehbar auf einem Planetenträger 107 gelagert. Die Sonnenwelle 101 dreht sich um eine Drehachse, die mit einer Mittelachse 109 identisch ist.

Um das Sonnenrad 103 mit Öl zu versorgen, ist eine Ölleitung 111 vorgesehen. Die Ölleitung 111 hat die Form eines ringförmigen Hohlraums, der zu der Mittelachse 109 rotationssymmetrisch ist. Sie wird gebildet durch einen Grundkörper 113 und eine auf den Grundkörper 113 aufgeschraubte Platte 115. Die Platte 115 deckt eine in dem Grundkörper 113 rotationssymmetrisch um die Mittelachse 109 verlaufende Nut 117 ab. Auf die Weise bildet die Platte 115 zusammen mit der Nut 117 die Ölleitung 111.

Die Platte 115 weist drei parallel zu der Mittelachse 109 verlaufende Bohrungen 119a, 119b, 119c auf. Die Bohrungen 119a, 119b, 119c sind als Durchgangsbohrungen ausgeführt und münden in die Ölleitung 111.

Eine erste Bohrung 119a ist mit einem ersten Stopfen 121a öldicht verschlossen. In einer zweiten Bohrung 119b befindet sich eine Düse 123. Eine dritte Bohrung 119c ist mit einem zweiten Stopfen 121b öldicht verschlossen.

Wird Öl in die Ölleitung 111 eingeleitet und mit Druck beaufschlagt, tritt das Öl aus der Düse 123 aus. Die Düse 123 ist in der zweiten Bohrung 119b so positioniert, dass das austretende Öl auf die Verzahnung des Sonnenrads 103 spritzt.

Der Grundkörper 113 ist in einer gehäusefesten Struktur 125 verschraubt. Die gehäusefeste Struktur 125 bildet zudem einen Lagersitz für ein Lager 127. Dieses wird über eine in den Grundkörper 113 eingebrachte Bohrung 129 mit Öl versorgt. Die Bohrung 129 verläuft parallel zu der Mittelachse 109. Die Mittelachse 109 ist senkrecht ausgerichtet. Daher fließt Öl, das aus der Ölleitung 111 durch die Bohrung 129 austritt, in das Lager 127.

### Bezugszeichen

- 101: Sonnenwelle
- 103: Sonnenrad
- 105: Planetenrad
- 107: Planetenträger
- 109: Mittelachse
- 111: Ölleitung
- 113: Grundkörper
- 115: Platte
- 117: Nut
- 119a: erste Bohrung
- 119b: zweite Bohrung
- 119c: dritte Bohrung
- 121a: erste Stopfen
- 121b: zweiter Stopfen
- 123: Düse
- 125: gehäusefeste Struktur
- 127: Lager
- 129: Bohrung

## Patentansprüche

1. Getriebe mit mindestens einem drehbaren Bauteil (101, 103), mindestens einer Ölleitung (111) und mindestens einem Verschlusselement (121a), mit dem wahlweise eine erste und eine zweite Austrittsöffnung (119a, 119b) der Ölleitung (111) verschließbar ist; wobei
eine der Austrittsöffnungen (119a) mit dem Verschlusselement (121a) verschlossen und eine der Austrittsöffnungen (119b) unverschlossen ist; wobei
das Bauteil (101, 103) mindestens eine Schmierstelle (103) aufweist; wobei
die unverschlossene Austrittsöffnung (119b) auf die Schmierstelle (103) gerichtet ist; **dadurch gekennzeichnet, dass**
die Austrittsöffnungen (119a, 119b) in einem unterschiedlichen Abstand zu einer Drehachse des Bauteils angeordnet sind.

2. Getriebe nach Anspruch 1; **dadurch gekennzeichnet, dass**
die Ölleitung (111) als Ringkanal ausgebildet ist, dessen Mittelachse (109) mit einer Drehachse des Bauteils (101, 103) übereinstimmt.

3. Getriebe nach einem der vorhergehenden Ansprüche; **gekennzeichnet durch** mindestens eine Nut (117) und mindestens eine Platte (115); wobei
die Platte (115) die Austrittsöffnungen (119a, 119b) aufweist und die Nut (117) abdeckt.

4. Getriebe nach dem vorhergehenden Anspruch; **gekennzeichnet durch** einen Grundkörper (113), der die Nut (117) aufweist, und auf dem die Platte (115) fixiert ist.

5. Getriebebaureihe; **gekennzeichnet durch**
ein erstes Getriebe nach einem der vorhergehenden Ansprüche und ein zweites Getriebe nach einem der vorhergehenden Ansprüche; wobei
jeweils die Ölleitungen (111) und die Verschlusselemente (121a) des ersten Getriebes und des zweiten Getriebes baugleich sind; wobei
die erste Austrittsöffnung (119a) der Ölleitung (111) des ersten Getriebes und die zweite Austrittsöffnung (119b) der Ölleitung (111) des zweiten Getriebes verschlossen sind.

## Claims

1. Transmission having at least one rotatable component (101, 103), having at least one oil line (111), and having at least one closure element (121a) by which selectively a first and a second outlet opening (119a, 119b) of the oil line (111) is able to be closed off; wherein
one of the outlet openings (119a) is closed off by the closure element (121a) and one of the outlet openings (119b) is not closed off; wherein
the component (101, 103) has at least one lubrication point (103); wherein
the outlet opening (119b) that is not closed off is directed towards the lubrication point (103); **characterized in that**
the outlet openings (119a, 119b) are arranged at a different distance from an axis of rotation of the component.

2. Transmission according to Claim 1; **characterized in that**
the oil line (111) is in the form of an annular channel whose central axis (109) coincides with an axis of rotation of the component (101, 103).

3. Transmission according to either of the preceding claims; **characterized by** at least one groove (117) and at least one plate (115); wherein
the plate (115) has the outlet openings (119a, 119b) and covers the groove (117).

4. Transmission according to the preceding claim; **characterized by**
a base body (113) which has the groove (117) and on which the plate (115) is fixed.

5. Transmission series; **characterized by**
a first transmission according to one of the preceding claims and a second transmission according to one of the preceding claims; wherein
in each case the oil lines (111) and the closure elements (121a) of the first transmission and of the second transmission are structurally identical; wherein
the first outlet opening (119a) of the oil line (111) of the first transmission and the second outlet opening (119b) of the oil line (111) of the second transmission are closed off.

## Revendications

1. Transmission comprenant au moins un composant rotatif (101, 103) et au moins un conduit (111) pour de l'huile et au moins un élément de fermeture (121a) permettant de fermer au choix une première et une deuxième ouverture de sortie (119a, 119b) du conduit (111) pour de l'huile ;
l'une des ouvertures de sortie (119a) est fermée par l'élément de fermeture (121a) et l'une des ouvertures de sortie (119b) n'est pas fermée ;
le composant (101, 103) présente au moins un point de lubrification (103) ;
l'ouverture de sortie (119b) non fermée est orientée vers le point de lubrification (103) ; **caractérisée en ce que** les ouvertures de sortie (119a, 119b) sont agencées à une distance différente d'un axe de rotation du composant.

2. Transmission selon la revendication 1 ; **caractérisée en ce que**
le conduit (111) pour de l'huile est réalisé sous forme de canal annulaire dont l'axe central (109) coïncide avec un axe de rotation de l'élément (101, 103).

3. Transmission selon l'une des revendications précédentes ; **caractérisée par** au moins une rainure (117) et au moins une plaque (115) ;
la plaque (115) présente les ouvertures de sortie (119a, 119b) et recouvre la rainure (117).

4. Transmission selon l'une des revendications précédentes, **caractérisée par**
un corps de base (113) qui comprend la rainure (117) et sur lequel la plaque (115) est fixée.

5. Série de transmissions ; **caractérisée par**
une première transmission selon l'une des revendications précédentes et une deuxième transmission selon l'une des revendications précédentes ;
les conduits (111) pour de l'huile et les éléments de fermeture (121a) de la première transmission et de la deuxième transmission sont chacun de construction identique ;
la première ouverture de sortie (119a) du conduit (111) pour de l'huile de la première transmission et la deuxième ouverture de sortie (119b) du conduit (111) pour de l'huile de la deuxième transmission sont obturées.
